Europäisches Patentamt

European Patent Office

Office européen des brevets

(11) Numéro de publication: **0 205 364**

**A1**

## (12) DEMANDE DE BREVET EUROPEEN

(21) Numéro de dépôt: **86400990.7**

(22) Date de dépôt: **07.05.86**

(51) Int. Cl.4: **H01S 3/03** , H01S 3/04

(30) Priorité: **13.05.85 FR 8507211**

(43) Date de publication de la demande:
**17.12.86 Bulletin 86/51**

(84) Etats contractants désignés:
**BE CH DE GB IT LI NL SE**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Luciani, Pierre-Yves 10 rue de la T te Ronde F-91190 Villiers le Bacle(FR)**

(74) Mandataire: **Mongrédien, André et al c/o BREVATOME 25, rue de Ponthieu F-75008 Paris(FR)**

(54) **Installation pour la production d'un faisceau laser.**

(57) Installation pour la production d'un faisceau laser comportant une tête laser (6) comprenant un tube enceinte (24) dont une extrémité est fermée, l'autre extrémité étant pourvue d'un orifice d'entrée (20) et de sortie (22) de gaz, un tube laser (40) relié par une embouchure (48) à l'orifice de sortie et disposé à l'intérieur du tube enceinte de telle sorte qu'une première cavité (44), définie entre le tube laser et le tube enceinte, communique avec une seconde cavité (46) définie par l'espace intérieur au tube laser ; un circuit, raccordé aux orifices d'entrée et de sortie de gaz, et comprenant des moyens de circulation d'un gaz permettant à celui-ci de s'écouler de l'orifice d'entrée (20) vers l'orifice de sortie (22) en parcourant successivement la première, la seconde cavité puis l'embouchure, le gaz servant à la fois de gaz actif pour la production du faisceau laser et de gaz refroidisseur.

FIG.2

## Installation pour la production d'un faisceau laser

La présente invention a pour objet une installation pour la production d'un faisceau laser. Elle s'applique notamment en métallurgie, chirurgie ou tout autre domaine pour lequel une manipulation aisée de l'installation est requise.

On distingue deux catégories dans les lasers à gaz de puissance relativement forte actuellement conçus.

Tout d'abord, les lasers à flux perdu : dans un tel dispositif, l'enceinte définie par l'espace intérieur au tube laser est parcourue par un flux de gaz relativement lent car la différence de pression du gaz aux deux extrémités est faible. Le rendement est moyen et la puissance délivrée par un tel dispositif est de l'ordre de 75 W par mètre.

La seconde catégorie correspond aux lasers à flux horizontal forcé. Le gaz circule dans ladite enceinte à une vitesse élevée grâce à une différence de pression importante créée par une pompe de circulation appelée pompe "Roots". La puissance délivrée est importante, de l'ordre de 500 W par mètre. Mais le tube laser et la pompe sont généralement disposés dans le même bâti, ce qui rend l'installation lourde et encombrante.

De plus, pour ces deux catégories de lasers à gaz, le tube laser est refroidi par une circulation d'eau, ce qui pose également un problème de poids et de facilité de manipulation. En effet, pour que la pompe de circulation d'eau fonctionne correctement, il est nécessaire que le tube laser soit en position sensiblement horizontale. Des lignes optiques articulées doivent alors être mises en place pour amener le faisceau laser sur le lieu de travail. Ces lignes optiques constituées de miroirs et de lentilles font perdre beaucoup de puissance, ce qui nécessite des installations laser de forte puissance au départ.

L'invention a justement pour objet une installation pour la production d'un faisceau laser légère, relativement puissante et facilement manipulable, permettant donc de pallier les inconvénients susmentionnés.

L'installation pour la production d'un faisceau laser selon l'invention comporte :

-une tête laser comprenant un tube enceinte dont une extrémité est fermée, l'autre extrémité étant pourvue d'un orifice d'entrée de gaz et d'un orifice de sortie de gaz, un tube laser disposé à l'intérieur du tube enceinte, de telle sorte qu'une première cavité est définie entre le tube laser et le tube enceinte, l'espace intérieur au tube laser définissant une seconde cavité, une extrémité du tube laser étant reliée à l'orifice de sortie par une embouchure de sortie, un espace ménagé entre l'autre extrémité du tube laser et l'extrémité fermée du tube enceinte permettant à la première cavité de communiquer avec la seconde cavité,

-un circuit, raccordé aux orifices d'entrée et de sortie de gaz, et comprenant des moyens de circulation d'un gaz permettant à celui-ci de s'écouler dans la tête laser, de l'orifice d'entrée vers l'orifice de sortie en parcourant la première cavité dans un premier sens puis la seconde cavité et l'embouchure dans un second sens opposé audit premier sens, le gaz servant à la fois de gaz actif pour la production du faisceau laser et de gaz refroidisseur.

Avantageusement, le circuit comporte des tuyaux souples reliant les moyens de circulation du gaz à la tête laser.

Une telle installation permet donc de remplacer le refroidissement liquide du tube laser par un refroidissement gazeux, le gaz de refroidissement étant également le gaz actif. Le poids ainsi gagné et la connexion par tuyaux souples de la tête laser avec les moyens de circulation permettent de rendre cette tête laser manipulable "à la main", c'est-à-dire de pouvoir la disposer dans toutes les positions, très près du lieu de travail.

Commodément, ladite embouchure est située dans le prolongement du tube laser et un dispositif de réflexion muni d'un miroir est disposé dans cette embouchure, de sorte que le gaz circule autour du dispositif de réflexion de l'extrémité du tube laser reliée à l'embouchure vers l'orifice de sortie du gaz.

D'autres caractéristiques et avantages de l'invention ressortiront mieux de la description qui suit, donnée à titre explicatif mais nullement limitatif, en référence aux figures annexées, sur lesquelles :

-la figure 1 représente une vue schématique d'un mode de réalisation de l'installation selon l'invention,

-la figure 2 représente, en coupe longitudinale, un mode de réalisation préféré de la tête laser de l'invention,

-la figure 3 représente, en perspective, une extrémité du tube laser et des entretoises disposées entre celui-ci et le tube enceinte,

-la figure 4 représente, en perspective et en coupe partielle, le miroir et le dispositif de réglage de son orientation.

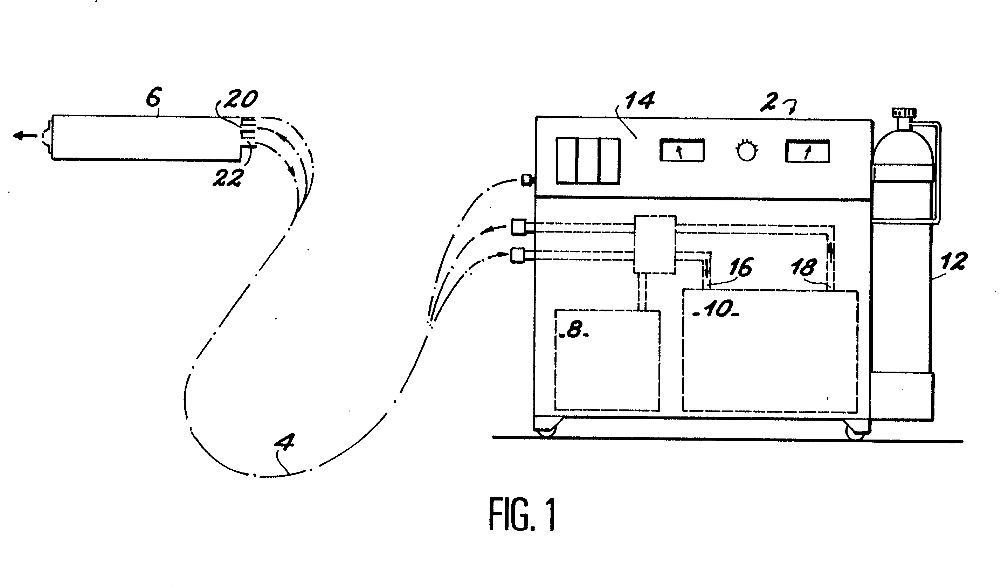

Une vue générale de l'installation pour la production d'un faisceau laser selon l'invention est représentée sur la figure 1.

L'installation comporte un groupe de commande 2 relié par des tuyaux souples 4 à une tête laser 6. Le groupe de commande 2 comprend un bâti par exemple mobile sur lequel sont disposées notamment une pompe à vide 8, une pompe de circulation dite "Roots" 10, une bouteille 12 pour l'alimentation en gaz et une console de commande 14. Le gaz utilisé est par exemple un mélange d'hélium, d'azote et de dioxyde de carbone.

La pompe de circulation 10 comporte un orifice d'aspiration 16 de gaz et un orifice d'expulsion 18 de gaz. Le sens du mouvement du gaz lorsque la pompe est actionnée est indiqué en exemple par les flèches correspondantes.

Les orifices 16 et 18 de la pompe 10 sont reliés à deux tuyaux souples 4 par des tubulures. Le tuyau souple 4, communiquant avec l'orifice d'expulsion 18 de gaz, est relié à un orifice d'entrée 20 de gaz de la tête laser 6. De même, le tuyau souple 4 communiquant avec l'orifice d'aspiration 16 de gaz est relié à un orifice de sortie 22 de gaz de la tête laser 6.

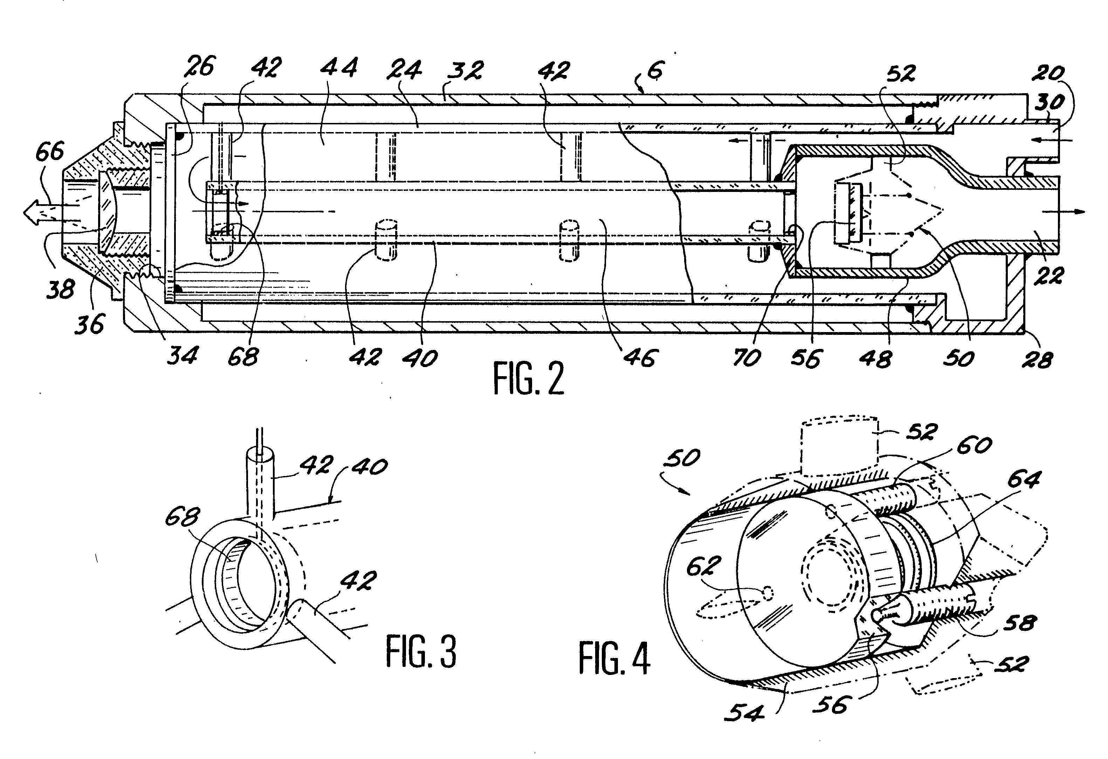

La tête laser 6 va à présent être décrite en détail à l'aide des figures 2, 3 et 4.

La tête laser 6 comporte tout d'abord un tube enceinte 24 cylindrique, en silice, fermé à une extrémité (gauche sur la figure 2) par une lame semi-transparente 26 en séléniure de zinc par exemple, la liaison étant réalisée par collage. Un flasque 28 est fixé à l'autre extrémité du tube enceinte 24. Ce flasque 28, en acier, comporte une tubulure 30 en saillie formant ledit orifice d'entrée 20 de gaz et permettant la connexion du tuyau souple 4 correspondant.

Un capot protecteur 32 cylindrique est disposé extérieurement et coaxialement au tube enceinte 24. Ce capot 32 est en butée sur la lame 26, et prend appui autour du tube enceinte 24 et autour du flasque 28. Le capot 32 est par exemple en plastique armé et sert notamment de protection contre les chocs et d'isolant thermique avec l'extérieur.

L'extrémité du capot 32 en butée contre la lame 26 comporte un alésage intérieur 34 dans lequel est formé un filetage. Un porte-lentille 36, en aluminium par exemple, est vissé dans ledit filetage et comprend un alésage intérieur dans lequel est logée fixement une lentille 38 de focalisation.

Un tube laser 40, en silice, est fixé dans le tube enceinte 24 coaxialement à celui-ci par des entretoises 42 en silice, par exemple sous la forme de plusieurs groupes de trois entretoises espacées de 120° les unes par rapport aux autres comme le représente la figure 3. L'extrémité du tube laser 40 adjacente à la lame 26 est disposée à une certaine distance de cette lame 26. De cette manière, une première cavité 44, définie par l'espace annulaire entre le tube laser 40 et le tube enceinte 24, peut communiquer avec une seconde cavité 46, définie par l'espace intérieur au tube laser 40.

L'extrémité du tube laser 40, située du côté du flasque 28, se prolonge par une embouchure 48 de forme tubulaire traversant de façon étanche un trou ménagé dans le flasque 28, pour former une tubulure en saillie formant ledit orifice de sortie 22 de gaz et permettant la connexion du tuyau souple 4 correspondant.

L'embouchure 48 est coaxiale au tube laser 40 et s'évase à proximité de celui-ci pour former une partie cylindrique de plus grand diamètre dans laquelle un dispositif de réflexion 50 est fixé par des entretoises 52.

Ce dispositif de réflexion 50 classique est représenté plus en détail sur la figure 4. Il comporte un boîtier cylindrique 54 fixé auxdites entretoises 52 et dans lequel est logé un miroir 56. Celui-ci est orientable suivant le principe classique "trait-point-plan" à l'aide de deux vis 58, 60, d'un point d'appui 62 et d'un ressort de rappel 64. Le réglage est effectué pour orienter le miroir 56 perpendiculairement à l'axe de révolution du tube laser 40.

Un espace annulaire est ménagé entre le dispositif de réflexion 50 et l'embouchure 48, permettant à un gaz de circuler du tube laser 40 vers l'orifice de sortie 22 en contournant le dispositif de réflexion 50. Une telle circulation de gaz et le choix d'un matériau tel que du laiton, bon conducteur de la chaleur, pour le boîtier 54, les entretoises 52 et l'embouchure 48, permettent un refroidissement efficace du miroir 56.

Le faisceau laser sortant de la tête laser 6 indiqué par la flèche 66 est créé par une décharge électrique produite par deux électrodes 68, 70 formées aux extérmités du tube laser 40 par métallisation au nickel selon un anneau.

Du gaz froid en provenance de la pompe de circulation 10 pénètre par l'orifice d'entrée 20 autour de l'embouchure 48 puis dans la première cavité 44, faisant office de gaz refroidisseur du tube laser 40 et de l'embouchure 48. Le gaz pénètre alors dans la seconde cavité 46, servant alors de gaz actif pour la production du faisceau laser, s'écoule ensuite par l'embouchure 48 en refroidissant le miroir 56 vers l'orifice de sortie 22 puis vers la pompe 10. Une certaine quantité de gaz, 10% en moyenne est rejetée du circuit et se trouve remplacée par du gaz contenu dans la bouteille 12. Le gaz est refroidi, par exemple par une circulation d'eau disposée dans le groupe de commande 2 et donc indépendante de la tête laser 6.

Cette méthode de refroidissement est très avantageuse puisqu'elle supprime le refroidissement liquide du tube laser. Ceci permet donc de gagner du poids (il n'y a pas d'eau dans la tête) et de supprimer les problèmes liés à la circulation de liquide. On peut ainsi orienter la tête laser dans toutes les directions et positionner celle-ci idéalement le plus près possible du lieu de travail. Il n'est plus nécessaire alors de disposer de lignes optiques amenant le faisceau laser de la tête laser vers le lieu de travail, lignes optiques faisant perdre beaucoup de puissance.

De plus, la circulation forcée du gaz permet d'obtenir un bon rendement de l'installation. La puissance obtenue est de l'ordre de 100 W pour 0,3 m de longueur.

La lentille de focalisation 38 focalisant le faisceau laser sur le lieu de travail est disposée à proximité de la fenêtre 26, ce qui évite une divergence de faisceau nuisible à la précision et au rendement.

Les défauts relevés sur les lasers de l'art antérieur sont donc résolus par cette installation légère, puissante, manipulable "à la main" et facile d'emploi.

Bien entendu, la description ci-dessus n'a été donnée qu'à titre d'exemple, toutes modifications dans les formes de réalisation pouvant être envisagées sans modifier le principe fondamental de l'invention.

On peut par exemple envisager un orifice de sortie de gaz perpendiculaire à l'embouchure 48.

**Revendications**

1. Installation pour la production d'un faisceau laser, caractérisée en ce qu'elle comporte :

-une tête laser (6) comprenant un tube enceinte - (24) dont une extrémité est fermée, l'autre extrémité étant pourvue d'un orifice d'entrée (20) de gaz et d'un orifice de sortie (22) de gaz, un tube laser (40) disposé à l'intérieur du tube enceinte - (24) de telle sorte qu'une première cavité (44) est définie entre le tube laser (40) et le tube enceinte - (24), l'espace intérieur au tube laser (40) définissant une seconde cavité (46), une extrémité du tube laser étant reliée à l'orifice de sortie (22) par une embouchure (48) de sortie, un espace ménagé entre l'autre extrémité du tube laser (40) et l'extrémité fermée du tube enceinte (24) permettant à la première cavité (44) de communiquer avec la seconde cavité (46),

-un circuit, raccordé aux orifices d'entrée (20) et de sortie (22) de gaz, et comprenant des moyens de circulation (10) d'un gaz permettant à celui-ci de s'écouler dans la tête laser (6), de l'orifice d'entrée (10) vers l'orifice de sortie (22) en parcourant la première cavité (44) dans un premier sens puis dans la seconde cavité (46) et l'embouchure (48) dans un second sens opposé audit premier sens, le gaz servant à la fois de gaz actif pour la production du faisceau laser et de gaz refroidisseur.

2. Installation selon la revendication 1, caractérisée en ce que le circuit comporte des tuyaux souples (4) reliant les moyens de circulation (10) du gaz à la tête laser (6).

3. Installation selon l'une quelconque des revendications 1 et 2, caractérisée en ce que ladite embouchure (48) est située dans le prolongement du tu be laser (40) et qu'un dispositif de réflexion - (50) muni d'un miroir (56) est disposé dans cette embouchure (48), de telle sorte que le gaz circule autour du dispositif de réflexion (50) de l'extrémité du tube laser (40) reliée à l'embouchure (48) vers l'orifice de sortie (22) du gaz.

FIG. 1

0 205 364

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 071 054 (C.G.E.)<br>* Revendications 1,4; figures 1,2 * | 1 | H 01 S    3/03<br>H 01 S    3/04 |
| | --- | | |
| A | FR-A-2 280 989 (KRAFTWERK UNION)<br>* Page 1, lignes 1-9 * | 1 | |
| | --- | | |
| A | EP-A-0 065 761 (BATELLE) | | |
| | ----- | | |

| | DOMAINES TECHNIQUES RECHERCHES (Int. Cl.4) |
|---|---|
| | H 01 S |

Le présent rapport de recherche a été établi pour toutes les revendications

| Lieu de la recherche | Date d'achèvement de la recherche | Examinateur |
|---|---|---|
| LA HAYE | 26-08-1986 | BORMS F. |